# EUROPÄISCHE PATENTANMELDUNG

(11) **EP 3 441 200 A1**
(43) Veröffentlichungstag der Anmeldung: **13.02.2019**
(21) Anmeldenummer: 17185180.1
(22) Anmeldetag: 07.08.2017
(51) Int. Cl.: B25J 9/16, G05B 19/401, G01B 21/04

(54) **REFERENZIERVERFAHREN UND VORRICHTUNG FÜR INDUSTRIEROBOTER**

(71) Anmelder: Elwema Automotive GmbH, 73479 Ellwangen (DE)
(72) Erfinder: ALVAREZ, Antonio, D-52224 Stolberg (DE); ILG, Eberhard, D-73492 Rainau-Saverwang (DE); ZIESEL, Robert, D-73434 Aalen-Fachsenfeld (DE)
(74) Vertreter: Lippert Stachow Patentanwälte Rechtsanwälte

(57) **Zusammenfassung**

Die Erfindung betrifft eine Vorrichtung und ein Verfahren zum Referenzieren des Tool Center Point (TCP) eines Roboters, z.B. eines Industrie-Gelenkarmroboters (2, 3, 4, 5).
Die Vorrichtung umfasst einen Block (B) und ein Messeck (ME) mit drei korrespondierenden im Winkel zueinander angeordneten Flächen. Drei Flächen (F1... F6) weisen Sensoren (S1... S6) auf, die im Wesentlichen senkrecht zu der jeweiligen Fläche ansprechen. Es sind dabei insgesamt mindestens sechs Sensoren (S1... S6) auf drei Flächen, entweder des Messecks oder des Blocks, verteilt.

Je nach Anordnung bildet der Block (B) oder das Messeck (ME) eine Referenz, deren Relativlage zum TCP auch bei Drift des TCP anhand der Sensoren (S1... S6) zuverlässig bestimmt werden kann. Das Ergebnis hieraus dient als Grundlage zur Neufestlegung bzw. Kalibrierung der Koordinaten des TCP beim Referenzierverfahren.

Die Lösung ist robust im Aufbau, ermöglicht die Verwendung preiswerter Sensoren und erlaubt zudem ein vollautomatisches Referenzieren bzw. Kalibrieren.

## Beschreibung

### TECHNISCHES GEBIET

Die vorliegende Erfindung betrifft ein Referenzierverfahren und eine Referenziervorrichtung zur Kalibrierung von Industrierobotern, wie z.B. eines mehrachsigen Industrie-Gelenkarmroboters.

Solche Industrieroboter weisen im allgemeinen mehrere über Gelenke gegeneinander verschwenkbare Roboterarme sowie eine über Gelenke bewegliche Roboterhand (Engl. "end effector") auf, an deren vorderen Ende ein Werkzeug wie ein Schweißgerät, ein Schneidgerät, ein Bohrer, ein Fräser und/oder ein Greifer angeordnet werden kann. Die Gelenke sind über elektrische Antriebsorgane gegeneinander beweglich. Jede Stellung der Gelenke wird über dem jeweiligen Gelenk zugeordnete Meßeinrichtungen gemessen und in einer Steuereinheit registriert.

### STAND DER TECHNIK

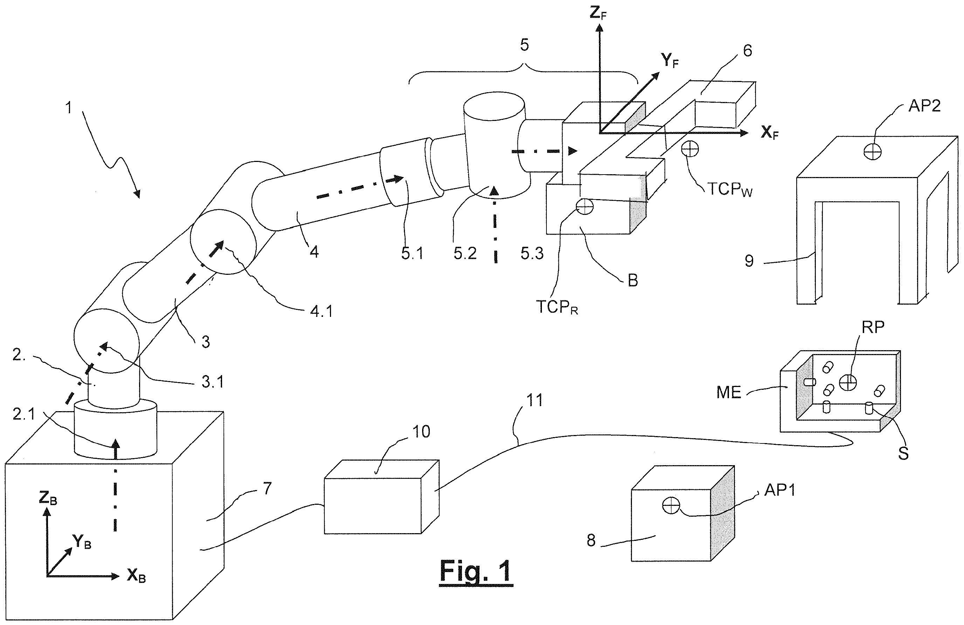

Fig. 1 zeigt im linken Teil der Abbildung schematisch und rein beispielhaft eine typische Konfiguration mit einem Industrieroboter 1 mit drei Roboterarm-Teilen 2, 3 und 4 mit den Gelenken 2.1, 3.1 und 4.1 sowie der Hand 5 mit den Gelenken 5.1, 5.2, und dem Flansch 5.3. Die jeweiligen Gelenkachsen sind durch Pfeile angedeutet. Am Flansch der Hand bzw. des Endeffektors ist ein Werkzeug angebracht, hier als Greifzange 6. Der Roboter ist ortsfest über eine Bodenplatte 7 mit dem Boden verbunden. Dem Roboter wird im allgemeinen ein Koordinatensystem x_{B}, y_{B}, z_{B} mit einem Koordinatenursprung 0_{B} und dem Flansch ein Koordinatensystem x_{F}, y_{F}, z_{F} mit dem Koordinatensystem 0_{F} zugeordnet. Aus den 6 Winkelstellungen der Gelenke 2.1, 3.1, 4.1, 5.1, 5.2 und 5.3 sind die Koordinaten des Flansches der Roboterhand x_{F}, y_{F}, z_{F} in Bezug auf die Koordinaten im Koordinatensystems x_{B}, y_{B}, z_{B} des Roboters bestimmt. Ferner sind Roboter bekannt, bei denen beispielsweise die Armteile 3 und 4 durch einen Teleskoparm ersetzt sind. Die nachfolgend beschriebene Erfindung gilt in gleicher Weise für derartige Roboter mit Teleskoparmen und auch für andere Roboterkonfigurationen.

Das Werkzeug 6 weist einen sogenannten Tool Center Point ("TCP_W") auf, dessen Koordinaten sich bei bekannten, in der Speichereinheit des Steuergerätes gespeicherten Abmessungen des Werkzeugs aus den Koordinaten des Flansches errechnen. Vor der erstmaligen Durchführung der Arbeitsaufgabe des Roboters (hier z.B. Ergreifen des Werkstücks 8) wird das Werkzeug manuell oder durch entsprechende elektronische Steuerung durch den Bediener des Roboters zum Werkstück 8 geführt, um den Arbeitspunkt AP1 zu ermitteln und dessen Koordinaten in der Speichereinheit zu erfassen (sogenanntes "Teachen"). Eine zweite Aufgabe des Roboters könnte sein, das Werkstück 8 auf dem Tisch 9 abzulegen. Auch die Koordinaten des Arbeitspunkt AP2 werden dem Roboter durch Teachen beigebracht.

Nach dem Teachen kann der Roboter vermöge seiner Steuerung und der gespeicherten Koordinaten von TCP_W, AP1 und AP2 die Aufgabe automatisch vielfach wiederholen, indem der TCP_W mit dem AP1 und anschließend mit AP2 zur Deckung gebracht werden.

Im Zuge der wiederholten Ausführung der Aufgabe unterliegt die räumliche Lage (Koordinaten) des TCP_W Veränderungen u.a. am Roboter durch Verschleiß, Verformung, und Umwelteinflüssen wie Temperatur, etc. ("Drift"), wodurch Bearbeitungsfehler bei der Durchführung der Aufgabe auftreten können. Die Drift ist umso größer, je weiter die Auslage des Roboterarms am Arbeitspunkt ist. Beim Austausch eines Roboters durch einen identischen können durch Herstellungstoleranzen, unterschiedliche Gelenkspiele, Positionierfehler des Roboters, etc., weitere Abweichungen der Lage des TCP_W bedingt sein.

Um ein wiederholtes aufwändiges Teachen des Roboters zu vermeiden, wurde daher bereits vorgeschlagen, Abweichungen der relativen Koordinaten von Arbeitspunkt AP und TCP automatisch zu minimieren, indem die relative Lage des TCP zu einem ortsfesten Referenzpunkt in regelmäßigen Abständen geprüft wird, die Koordinaten des TCP am Referenzpunkt neu definiert werden, sodass die relativen Koordinaten von Arbeitspunkt und TCP korrigiert werden.

Hierzu sind eine Reihe von optischen Verfahren bekannt, die jedoch sehr aufwendig sind.

Aus der US-Patentschrift 5,929,584 ist ein Verfahren bekannt, bei dem die Spritze (TCP) eines an der Roboterhand befestigten Schweißgerätes wiederholt auf unterschiedlichen Wegen in elektrischen Kontakt mit einem ortsfesten dreidimensionalen Winkel gebracht wird und aus den unterschiedlichen auf verschiedenen Wegen erhaltenen Kontakt-Koordinaten der TCP berechnet und ggf. korrigiert wird. Auch dieses Verfahren ist relativ aufwendig, da es eine mehrfache Bewegung des Roboterarmes erfordert.

### TECHNISCHE AUFGABE

Aufgabe der Erfindung ist es, ein technisch einfaches, zuverlässiges und kostengünstiges Verfahren und eine Vorrichtung zur automatischen Initialbestimmung sowie zur Überprüfung und Korrektur der Koordinaten des TCP zu schaffen. Es soll insbesondere für unterschiedlicher Arten von Industrierobotern gleichermaßen geeignet sein.

### ALLGEMEINE BESCHREIBUNG DER ERFINDUNG

Ein Aspekt der Erfindung umfasst einerseits ein im wesentlichen quaderförmiger oder gleichwertiger Block mit drei im Winkel, insbesondere rechten Winkel, zueinander angeordneten ebenen Flächen und andererseits ein dreidimensionaler Winkel ("Messeck"), mit nach innen weisenden, vorzugsweise zu den Flächen des Blockes komplementären Flächen, wobei an bzw. auf den Flächen Sensoren angeordnet sind, vorzugsweise abstandsmessende Tast-oder Kontakt-Sensoren. Ein resultierender Aspekt ist die Zusammenwirkung von Block und Messeck zum Referenzieren bzw. Kalibrieren eines Industrieroboters. Der Block wird in das Messeck gebracht und in Bezug auf die Achsen seiner Flächen so lange bewegt, bis der Block innerhalb des Messecks eine vorbestimmte Lage einnimmt, d.h. jeder der Sensoren einen diesem Kontakt zugeordneten vorbestimmten Abstand misst. Die vorbestimmte relative Lage von Block und Messeck definiert einen Referenz-Raumlage bzw. TCP_R des Flansches.

Vorzugsweise sind die Flächen des Blocks und die Flächen des Messecks jeweils im rechten Winkel zueinander angeordnet, die Flächen des Messecks müssen jedoch nicht zwingend senkrecht zueinander stehen. Insbesondere mindestens ein Referenzierbauteil, vorzugsweise das Referenzierbauteil am Roboter, weist drei Flächen auf die jeweils zueinander rechte Winkel bilden. Weiter bevorzugt weist das Messeck mindestens sechs Sensoren auf. Es ist auch möglich, alle Sensoren an den Flächen des Blockes anzuordnen oder verteilt, teilweise am Messeck und teilweise am Block.

Im Betrieb ist eines der Referenzierbauteile bzw. -elemente, d.h. Block oder Messeck, dabei am Roboter und das entsprechend andere Referenzierbauteile ortsfest innerhalb des von dem Roboter erreichbaren Raumes angeordnet.

Bevorzugt werden als Sensoren abstandmesssende Sensoren, wie Messtaster bzw. Tastsensoren, Triangulationssensoren, Seilzugsensoren oder dgl. eingesetzt.

Sechs abstandserkennende Sensoren sind ausreichend, um die räumliche Lage des Blocks innerhalb des Messecks vollständig zu erfassen. Zusätzliche Sensoren sind redundant und können zur rechnerischen Minimierung von Messfehlern eingesetzt werden. Diese Anordnung ist insbesondere für Gelenkarm-Roboter (engl. articulated robot manipulator), vorzugsweise mit mindestens sechs Freiheitsgraden, geeignet.

Auf jeder der Flächen des Messecks können zwei Sensoren angeordnet sein, die vorzugsweise auf der jeweiligen Fläche auf einer Linie parallel zu einer der drei Schnittlinien der Flächen angeordnet sind.

Vorzugsweise sind auf einer der Flächen des Messecks drei Abstandssensoren, auf einer zweiten Fläche zwei Abstandssensoren und auf der dritten Fläche ein Abstandssensor angeordnet. Zwei der drei Abstandssensoren der ersten Fläche und die beiden Abstandssensoren der zweiten Fläche sind bevorzugt auf einer Linie parallel zur Schnittlinie der Fläche mit einer anderen Fläche angeordnet. Weiter bevorzugt bilden die drei Abstandssensoren der ersten Fläche ein rechtwinkliges Dreieck, wobei je zwei der drei Sensoren auf einer Linie parallel zu einer der Schnittlinien mit den jeweils benachbarten Flächen liegen. Es können z.B. Tastsensoren eingesetzt werden.

Erfindungsgemäß wird nun entweder der Block oder das Messeck an der Roboterhand angebracht und das jeweils andere Teil, nämlich das Messeck oder der Block, in dem von dem Roboterarm erreichbaren Raum ("Engl. workspace") ortsfest angeordnet. Es kommt grundsätzlich nur auf die Relativbewegung zwischen Block und Messeck an.

Indem der Roboter den Block in das Messeck fährt oder umgekehrt das Messeck über den Block fährt, werden durch Registrierung der mit den Tastsensoren gemessenen mindestens sechs Abstände zwischen den Flächen des Blocks und denen des Messecks, welche die relative Lage von Block und Messeck eindeutig festlegen, die Koordinaten des Referenzpunktes RP des ortsfest angeordneten Teils und des Referenz-TCP_R an dem Flansch definiert und in der Robotersteuerung gespeichert.

Nachdem der Arbeitspunkt AP durch Teachen in der Robotersteuerung gespeichert ist, kennt die Robotersteuerung die Koordinaten von AP und TCP_W. Dieser Prozess kann dabei vollautomatisch erfolgen sowohl zum anfänglichen Einlernen im Sinne des sog. "Teachen", als auch zum nachträglichen Korrigieren der Koordinaten im Sinne einer Kalibrierung.

Verändern sich die Koordinaten des TCP_W durch äußere Einflüsse wie Drift oder Neuinstallation des Roboters, sodass die Robotersteuerung TCP_W und AP nicht mehr zur exakt Deckung bringen kann, fährt der Roboter den Block bzw. das Messeck mit den ursprünglichen Koordinaten des RP zum Referenzpunkt RP, misst die mindestens sechs Abstände zwischen den Flächen von Block und Messeck und korrigiert rechnerisch aus den Differenzen der Abstände zu den ursprünglichen Abständen die Koordinaten des TCP_W. Da der Referenz-TCP_R in festem Abstand zum Werkzeug-TCP_W am Flansch des Roboters angeordnet ist, und der RP in festem Abstand zum AP angeordnet sind, werden durch die Korrektur der Koordinaten des TCP_R auch gleichzeitig die Koordinaten des TCP_W korrigiert, so dass der Roboter AP und TCP_W wieder mit den ursprünglich "geteachten" Koordinaten des AP zur Deckung bringen kann.

In einer technisch bevorzugten Umsetzung werden RP und TCP_R so festgelegt, dass die drei Flächen von Block einerseits und Messeck andererseits jeweils rechte Winkel bilden, die drei korrespondierenden Flächenpaare von Block und Messeck bei der Referenzierung parallel sind, d.h. zumindest die den Tastsensoren einer Fläche zugeordneten Abstände gleich sind, und die Verbindungslinien jeweils zweier Tastsensoren auf dem Messeck parallel zu den Schnittlinien zweier Flächen liegen. Dann lässt sich die Korrektur auf besonders einfache Weise durch drei Rotationen und drei Translationen, z.B. im Koordinatensystem des Roboters, errechnen. Somit lässt sich die ursprüngliche relative Lage von Block und Messeck durch entsprechende minimale Roboterbewegungen (bezogen auf TCP_R) auch leicht wieder herstellen.

### KURZE FIGURENBESCHREIBUNG

Die Erfindung wird nachfolgend anhand der beigefügten Figuren ohne Beschränkung der Allgemeinheit näher erläutert:
FIG.1 zeigt schematisch einen Roboter mit der erfindungsgemäßen Referenziervorrichtung;
FIG.2 zeigt eine vergrößerte Darstellung der Referenziervorrichtung; und
FIG.3 zeigt eine schematische Darstellung des Ablaufs der TCP-Korrektur.

### DETAILLIERTE BESCHREIBUNG EINER AUSFUEHRUNGSFORM

Wie eingangs bereits erläutert, zeigt FIG.1 schematisch einen Roboter mit Roboterarm-Teilen 2, 3 und 4, die über Achsen bzw. Gelenke 2.1, 3.1 und 4.1 gegeneinander verschwenkt bzw. rotiert werden können. Die Roboterhand 5 weist ebenfalls Gelenke bzw. Achsen 5.1, 5.2 und 5.3 auf. An der Roboterhand 5 ist das für die Anwendung gewünschte Werkzeug 6 angeordnet, welches ggf. weitere Freiheitsgrade oder Aktuatoren aufweist. Durch die Steuereinheit 10 des Roboters kann das Werkzeug über die Winkelstellung der sechs Achsen innerhalb des Arbeitsraumes des Roboters in jede Position gebracht werden. Das Werkzeug weist einen Tool Center Point TCP_W auf, hier z.B. zwischen Greifarmen des Werkzeugs 6. Durch Teachen kennt die Robotersteuerung den Arbeitspunkt AP1 des Werkstücks 8, das von dem Werkzeug 6 ergriffen werden kann, z.B. indem beim Einlernen TCP_W und AP1 zur durch von der Robotersteuerung gesteuerte Roboterbewegung zur Deckung gebracht werden. Weiterhin kennt die Robotersteuerung analog den Arbeitspunkt AP2 hier beispielhaft auf einem Tisch 9, auf dem das Werkstück 8 abgelegt werden soll, indem der TCP_W mit dem AP2 zur Deckung gebracht wird.

Erfindungsgemäß wird nun an der Roboterhand ein Referenz-Tool Center Point TCP_R und innerhalb des Arbeitsraumes des Roboters, vorzugsweise in der Nähe des Arbeitspunktes, z.B. zwischen den Arbeitspunktes AP1 und AP2, ortsfest ein Referenzpunkt RP definiert. Dies erfolgt mittels eines zusätzlichen Blocks B, der hier beispielhaft an der Roboterhand 5 angebracht ist, und eines Messecks ME, das hier beispielhaft ortsfest zwischen den Arbeitspunkten AP1 und AP2 angeordnet ist. Der Block B hat eine vorbestimmte Gestalt und ist vorzugsweise ortsfest an der Roboterhand 5 befestigt. Das Messeck ME weist mindestens 6 abstandsmessende Sensoren S, z.B. Tastsensoren, auf. Referenz-TCP_R und RP bzw. deren Koordinaten werden definiert, indem der Block B in das Messeck gefahren wird und die von den Sensoren S gemessenen Abstände der drei Flächen des Blocks zu den korrespondierenden Flächen des Messecks gemessen und der Robotersteuerung 10 übermittelt werden. Die Übermittlung kann durch die Leitung 11 oder drahtlos z.B. per Funk erfolgen. Aus der Winkelstellung der 6 Achsen und den Messwerten der 6 Sensoren S lassen sich die Koordinaten des Referenzpunktes RP berechnen und in der Robotersteuerung speichern.

Vorzugsweise werden TCP_R und RP so definiert, dass geringfügige Abstandswerte zwischen den Flächen von Block B und Messeck ME vorgegeben werden und die relative Lage von Block B und Messeck ME schließlich durch minimale Roboterbewegung so nachjustiert wird, dass die gemessenen Abstände den vorgegebenen Abständen entsprechen.

Da TCP_W und TCP_R eine feste relative Lage an der Roboterhand 5 haben, kann eine Drift des TCP_W auf einfache Weise dadurch korrigiert werden, dass der zusätzliche Block B in das Messeck ME mit dem TCP_R gefahren wird, eine Abweichung der von den Sensoren S gemessenen Abstände gemessen wird und die Koordinaten des TCP_R mittels den gemessenen Abweichungen der Abstände korrigiert werden. Dies erlaubt und aufgrund des als fest betrachteten Abstandes von TCP_R und TCP_W auch die Korrektur bzw. Nachjustierung der Koordinaten des TCP_W. Der AP kann dann auf analoge Weise wieder mit ursprünglich durch Teachen ermittelten Koordinaten des AP zur Deckung gebracht werden.

Bilden die drei Flächen von Block B und Messeck ME rechte Winkel und sind je zwei Sensoren S auf einer Linie parallel zur Schnittlinie zweier Flächen angeordnet und sind ferner die vorgegeben Abstände der auf einer Fläche des Messecks ME angeordneten Sensoren gleich, lässt sich die Korrektur besonders einfach realisieren. Die Korrektur kann dann durch drei Rotationsbewegungen um Achsen parallel zu den Verbindungslinien zweier Sensoren einer Fläche des Messecks ME und drei Translationsbewegungen der Roboterhand 5 durchgeführt werden.

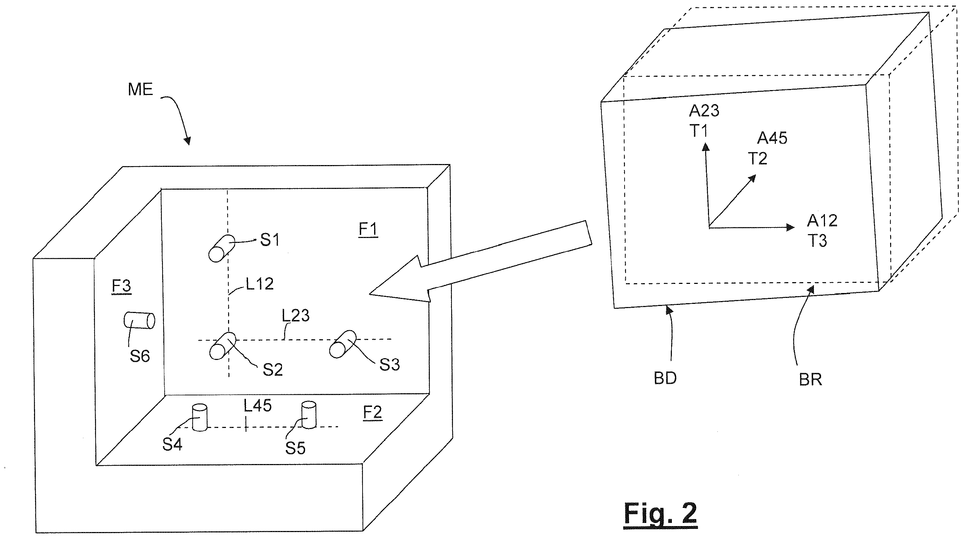

FIG.2 zeigt schematisch die bevorzugte erfindungsgemäße Referenziervorrichtung. Das Messeck ME weist 3 im rechten Winkel angeordnete Flächen F1, F2, F3 auf. Die Fläche F1 weist drei Sensoren S1, S2 und S3, die Fläche F2 zwei Sensoren S4 und S5 und die Fläche S3 einen Sensor S6 auf. Die Sensoren S1 und S2 liegen auf der strichlierten Linie L12, die Sensoren S2 und S3 auf der strichlierten Linie L23 und die Sensoren S4 und S5 auf der strichlierten Linie L45, wobei die strichlierten Linien jeweils parallel zu einer Schnittlinie einer Fläche liegen. Die Sensoren S1... S6 messen Abstand. Der Block B sei beispielsweise am Flansch des Roboters 5 angeordnet. Er wird von der Robotersteuerung in Richtung des Pfeiles in das Messeck ME gebracht. Seine Lage hat sich nach einer Drift des TCP in die durch durchgezogene Linien dargestellte Lage BD des Blocks mit den Koordinaten des aktuellen RP gegenüber der strichlierten Linien dargestellte Lage BR des Blocks verschoben. Die drei Pfeile bezeichnen die drei Rotationsbewegungen um die Achsen A12, A23 und A45 sowie die anschließenden drei Translationen T1, T2 und T3 gegen die Flächen F1, F2 und F3 des Messecks, die die Roboterhand ausführen muss, um den Block B wieder in seine ursprüngliche Lage zu bringen, d.h. die Koordinaten des RP zu korrigieren. Bei der Rotation A12 werden die von den Sensoren S1 und S2 gemessenen Abstände vergleichmäßigt, bei der Rotation um A23 der vom Sensor S3 gemessene Abstand angepasst und bei der Rotation um A45 die von S4 und S5 gemessenen Abstände vergleichmäßigt.

Analog kann verfahren werden, wenn auf jeder der drei Flächen des Messecks je zwei Sensoren angeordnet sind. Auch andere Arten von entfernungssensitiven Sensoren kommen in Betracht.

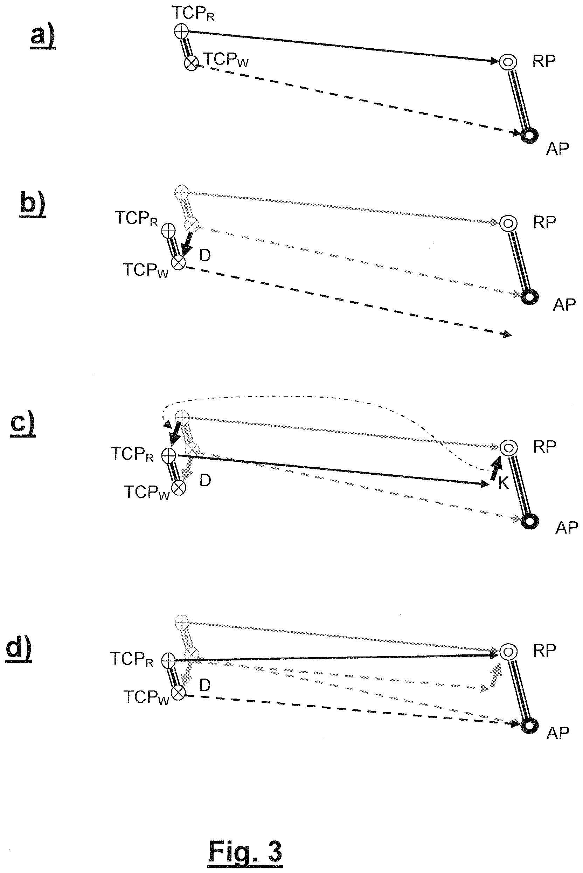

FIG.3 erläutert das erfindungsgemäße Verfahren. Die Robotersteuerung kennt aufgrund der Geometrie des Werkzeugs die Koordinaten des TCP_W relativ zum Roboterflansch und hat durch Teachen die Koordinaten des AP gespeichert, sodass das Werkzeug zur Durchführung der Aufgabe wiederholt automatisch den AP findet. Erfindungsgemäß wird an der Roboterhand 5 der Block B oder das Messeck ME angeordnet. Aus der bekannten, in der Steuereinheit gespeicherten Geometrie von Roboterflansch, und Block B bzw. Messeck ME sind auch die Koordinaten des Referenz-TCP_R vorbekannt. Die relative Lage von TCP_R und TCP_W ist u.a. durch Anordnung von Werkzeug und Block bzw. Messeck an der Roboterhand 5 festgelegt. Wenn sich an der Roboterhand 5 der Block B befindet, wird im Arbeitsraum des Roboters durch eine vordefinierte ortsfeste Anordnung des Messecks ME ein Referenzpunkt RP definiert, der sich in festem Abstand zum AP befindet. Indem Block B und Messeck ME in die definierte Lage zueinander gebracht werden, d.h. die von den sechs Sensoren S1...S6 gemessenen Abstände ermittelt und gespeichert werden, werden auch die Koordinaten des RP bestimmt (FIG.3a)). Dies kann insbesondere vollautomatisch erfolgen, sowohl beim Teachen als auch zum Nachjustieren. Die definierte Lage kann auch dadurch bestimmt sein, dass zumindest die zu einer Fläche gehörenden Sensoren S des Messecks ME jeweils gleichen Abstand messen.

Durch Austausch des Roboters oder Drift der Koordinaten des Roboterflansches kann sich die Lage des TCP_W und damit auch der TCP_R verschieben, wie durch den Pfeil D angedeutet. Aufgrund der gespeicherten Koordinaten des AP kann der TCP_W nicht mehr mit dem AP zur Deckung gebracht werden (FIG.3b)).

Durch Referenzierung werden nun die Koordinaten des TCP_R und damit zum TCP_W korrigiert, indem der Block B mit den gespeicherten Koordinaten des RP in das Messeck ME gefahren wird (oder umgekehrt), die Abstände von Block B und Messeck ME von den sechs Sensoren S1... S6 gemessen und mit den gespeicherten Messwerten verglichen werden. Aus den Abweichungen K = -D lassen sich die neuen Koordinaten des TCP_R errechnen oder durch vorzugsweise minimale Roboterbewegungen, z.B. mit drei Rotationsbewegungen und drei Translationsbewegungen der Roboterhand, die relative Nominallage von Block B und Messeck ME wiederherstellen, so dass die nunmehrige Lage zur Korrektur verwendet bzw. als korrigierte Koordinaten des TCP_R gespeichert werden kann (FIG.3c).

Mit den korrigierten Koordinaten des TCP_R kann der TCP_W wieder mit den durch Teachen ursprünglich ermittelten Koordinaten des AP zur Deckung gebracht werden, da die relativen Koordinaten von TCP_W und TCP_R einerseits und die relativen Koordinaten von RP und AP andererseits festliegen (FIG.3d).

Durch die vorgeschlagene Verfahrens- und Bauweise kann der Roboter bzw. dessen Endeffektor auf einfache Weise hinsichtlich der Position kalibriert bzw. regelmäßig rekalibriert werden kann um geänderten Arbeitsbedingungen, z.B. größerer Lasten, Verformungen, Alterungseffekten usw. oder einem Komplett- oder Teilaustauch des Roboters oder des Endeffektors Rechnung zu tragen.

## Patentansprüche

1. Referenzziervorrichtung für den TCP_W eines Roboters, insbesondere Industrie-Gelenkarmroboters, umfassend einen Block mit drei im Winkel zueinander angeordneten ebenen Flächen und ein Messeck wobei das Messeck drei zu den Flächen des Blockes korrespondierende Flächen aufweist und wobei drei Flächen jeweils im Wesentlichen senkrecht zu der jeweiligen Fläche ansprechende Sensoren aufweisen,
wobei insgesamt mindestens sechs Sensoren auf drei Flächen, entweder des Messecks oder des Blocks, verteilt sind, und wobei eines der Bauteile Block oder Messeck am Roboter und das andere Bauteil ortsfest innerhalb des von dem Roboter erreichbaren Raumes anordenbar ist.

2. Vorrichtung nach Anspruch 1, wobei die drei Flächen des am Roboter angeordneten Bauteils, insbesondere des Blocks, jeweils rechte Winkel bilden.

3. Vorrichtung nach Anspruch 1 oder 2, wobei alle Sensoren am Messeck und jeweils senkrecht auf der jeweiligen Fläche angeordnet sind und/oder als abstandsmessende Sensoren ausgeführt sind.

4. Vorrichtung nach einem der Ansprüche 1 bis 3, wobei jeweils zwei Sensoren einer Fläche auf einer zur Schnittlinie zweier Flächen parallelen Linie angeordnet sind.

5. Vorrichtung nach einem der Ansprüche 1 bis 4, wobei eine Fläche des Messeck drei Sensoren, eine Fläche zwei Sensoren und die dritte Fläche einen Sensor aufweist.

6. Vorrichtung nach Anspruch 5, wobei die drei Sensoren der dritten Fläche ein rechtwinkliges Dreieck aufspannen.

7. Vorrichtung nach einem der Ansprüche 1 bis 6, wobei als Sensoren abstandsmessende Tastsensoren eingesetzt werden.

8. Roboter, insbesondere mehrachsiger Industrie-Gelenkarmroboter, mit einem Flansch, einem Werkzeug mit einem TCP_W, wobei das Werkzeug an dem Flansch befestigt ist, und einer Speichereinheit zur Speicherung eines durch Teachen ermittelten Arbeitspunktes AP und einem innerhalb des von dem Roboter erreichbaren Raumes definierten Referenzpunktes RP sowie eines am Flansch definierten TCP_R und einer Steuereinheit für die automatisch gesteuerte Bewegung des Flansches in Bezug auf TCP_W AP, sowie TCP_R und RP, umfassend einen Block und ein Messeck nach einem der Ansprüche 1 bis 7.

9. Referenzierverfahren für den TCP eines Roboters nach Anspruch 8, umfassend
die Anbringung des Blockes an dem Roboterflansch oder ortsfest innerhalb des von dem Roboter erreichbaren Raumes,
die Anbringung eines Messecks ortsfest innerhalb des von dem Roboter erreichbaren Raumes, wenn der Block am Flansch angebracht ist, oder am Flansch, wenn der Block ortsfest innerhalb des von dem Roboter erreichbaren Raumes angebracht ist,
wobei der bzw. das am Flansch angebrachte Block oder Messeck einen Referenz-TCP_R definiert,
wobei das Messeck mindestens 6 auf die Flächen des Messecks verteilte Kontaktsensoren aufweist,
Verfahren des Flansches Roboterhand so dass der Block innerhalb des Messecks in Kontakt mit den Sensoren kommt,
Registrieren des Abstandes jedes Kontaktpunktes von den Flächen des Blockes,
Speichern der entsprechenden Koordinaten des Roboters als Referenzpunkt RP,
im Falle einer Drift des TCP_W oder bei Neuinstallation des Roboters, erneutes Verfahren der Roboterhand mit dem gespeicherten ursprünglichen Koordinaten des RP zum RP, wobei der Block innerhalb des Messeck in Kontakt mit den Sensoren kommt,
Registrieren des Abstandes des von den Sensoren gemessenen Abstandes zwischen den Flächen des Blocks und des Messecks,
Registrieren der Abweichung der Abstände von den ursprünglichen Abständen, und
Korrektur des TCP_W anhand der Abweichungen und Speichern des korrigierten TCP_W.

10. Verfahren nach Anspruch 8, wobei der Referenzpunkt RP festgelegt wird, wenn zumindest die einer Fläche zugeordneten Sensoren gleichen Abstand messen oder definieren.

11. Verfahren nach Anspruch 9 oder 10, wobei die Korrektur der Koordinaten des TCP_W erfolgt, indem durch Roboterbewegung die ursprünglich als Referenzpunkt gespeicherten Abstände zwischen Block und Messeck wiederhergestellt werden und die dadurch veränderten Koordinaten des Roboters als korrigierter TCP_W gespeichert werden.
